# EUROPÄISCHE PATENTANMELDUNG

(11) **EP 2 328 181 A2**
(43) Veröffentlichungstag der Anmeldung: **01.06.2011**
(21) Anmeldenummer: 10186387.6
(22) Anmeldetag: 04.10.2010
(51) Int. Cl.: H01L 31/00, F24J 2/00

(54) **Vorrichtung zur Befestigung eines Photovoltaikmoduls auf einer insbesondere gewellten Dacheindeckung**

(30) Priorität: 25.11.2009 DE 202009016159 U
(71) Anmelder: Eternit AG, 69126 Heidelberg (DE)
(72) Erfinder: Reintjes, Frank, 59320, Enningerloh (DE)
(74) Vertreter: Prietsch, Reiner

(57) **Zusammenfassung**

Eine Vorrichtung zur material- und zeitsparenden Befestigung eines Photovoltaikmoduls auf einer Dacheindeckung ist gekennzeichnet durch ein Band (1) mit einer Länge entsprechend der Breite des Moduls und zur Auflage auf einem Element der Dacheindeckung in First/Trauf-Richtung bestimmt,
- mit einem im montierten Zustand firstseitigen Ende (2), das zum Übergreifen des firstseitigen Randbereiches des Moduls ausgebildet ist,
- mit einem im montierten Zustand traufseitigen Ende, das zur Befestigung eines Halters (3) für den traufseitigen Rand des Moduls ausgebildet ist,
- und mit einem Mittel (5) zum Verbinden des Bandes (1) durch das Element der Dacheindeckung hindurch mit der Dachunterkonstruktion.

## Beschreibung

Die Erfindung betrifft eine Vorrichtung zur Befestigung eines Photovoltaikmoduls auf einer Dacheindeckung, insbesondere einer gewellten Dacheindeckung z.B. aus Dachziegeln, Dachsteinen oder Wellplatten.

Solche Vorrichtungen oder Halterungen sind in unterschiedlichen Ausführungen bekannt und in der Regel so ausgebildet, dass sie die Gewichtskraft des Moduls sowie die zusätzlichen, durch Wind und/oder Schnee verursachten Lasten über Ständer oder Stützen in die Dachunterkonstruktion abtragen. Die hierfür erforderlichen Durchbrüche in der Dacheindeckung sind arbeitsaufwändig und können auch bei sorgfältiger Abdichtung im Laufe der Zeit undicht werden. Dieser Nachteil der bekannten Montagevorrichtungen fällt ganz besonders ins Gewicht, wenn eine vorhandene Dacheindeckung nachträglich mit Photovoltaikmodulen ausgestattet werden soll.

Der Erfindung liegt die Aufgabe zugrunde, eine Montagevorrichtung der einleitend angegebenen Gattung zur Verfügung zu stellen, die eine material- und zeitsparende Montage von Photovoltaikmodulen sowohl auf neuen als auch auf bestehenden Dacheindeckungen beliebiger Art ermöglicht.

Diese Aufgabe ist erfindungsgemäß durch ein Band gelöst, das zur Auflage auf einem Element der Dacheindeckung in First/Trauf-Richtung bestimmt ist, eine Länge entsprechend der Breite des Moduls hat und im Weiteren wie folgt ausgebildet ist:
- das im montierten Zustand firstseitige Ende des Bandes ist so ausgebildet, dass es den firstseitigen Randbereich des Moduls übergreift;
- das im montierten Zustand traufseitige Ende des Bandes ist zur Befestigung eines Halters für den traufseitigen Rand des Moduls ausgebildet
- die Vorrichtung umfasst Mittel, um das Band durch das Element der Dacheindeckung hindurch mit der Dachunterkonstruktion zu verbinden.

Das Band kann grundsätzlich aus einem Flachmaterialstreifen aus Metall bestehen. Bevorzugt hat das Band jedoch abgewinkelte Längsränder, d.h. den Querschnitt eines flachen U-Profils. Dadurch wird eine größere Verwindungsfestigkeit des Bandes erreicht, mit der Folge, dass die Materialstärke des Bandes geringer als bei einem Flachmaterialstreifen sein kann. Bei der bevorzugten Montage der Vorrichtung auf einem Wellenberg des Dacheindeckungselementes, z.B. eines gewellten Dachsteins, bewirken die abgewinkelten Längsränder des Bandes eine zwangsläufige Ausrichtung des Bandes in First/Trauf-Richtung, so dass ein einziges Mittel zum Verbinden des Bandes mit der Dachunterkonstruktion ausreicht.

Insbesondere kann das Band aus einem Blechstreifen, einem Blechprofilabschnitt oder einem Aluminiumstrangpressprofil bestehen.

Bevorzugt ist das firstseitige Ende des Bandes zur Bildung eines Schuhs zum Übergreifen des firstseitigen Randbereiches des Moduls zweimal abgewinkelt.

Das traufseitige Ende des Bandes kann zur Bildung einer Befestigungslasche für den Halter abgewinkelt sein, zweckmäßig in entgegengesetzter Richtung zu der Abwinkelung des firstseitigen Endes, d.h. in Richtung auf das Element der Dacheindeckung.

Als Halter für den traufseitigen Rand des Moduls genügt ein L-Winkel, dessen kurzer Schenkel den traufseitigen Rand des Moduls übergreift, während sein langer Schenkel mit dem traufseitigen Ende des Bandes verbunden ist.

Zur Verbindung des Halters mit dem traufseitigen Ende des Bandes, z.B. in Form einer Befestigungslasche, kommt insbesondere ein Blindniet oder eine Schraube in Betracht.

Um die Montage des Photovoltaikmoduls zu erleichtern, nämlich letzteres gegen Abgleiten zu sichern, noch bevor der Halter mit dem traufseitigen Ende des Bandes vernietet oder verschraubt ist, kann am traufseitigen Ende des Bandes wenigstens eine Nase als Anschlag für den traufseitigen Rand des Moduls ausgebildet sein. Vorzugsweise sind zwei derartige Nasen vorgesehen, und zwar in Form von kurzen, nach oben weisenden Abkantungen des traufseitigen Endes des Bandes beidseits einer gegensinnig abgekanteten Befestigungslasche.

Die Mittel zur Verbindung mit der Dachunterkonstruktion können aus mindestens einer Schraube bestehen, die, ein Loch in dem Band und ein weiteres Loch in dem Dacheindeckungselement durchgreifend, in eine Latte oder dergleichen eindrehbar ist, die mit der Dachunterkonstruktion verbunden ist. Diese Latte oder ein gleichwertiges Befestigungselement, die oder das in erster Linie die auf das Photovoltaikmodul wirkenden Windsogkräfte aufnimmt, kann insbesondere eine in Höhe des Loches in dem Dacheindeckungselement parallel zu den üblichen Dachlatten der Dachunterkonstruktion verlaufende Holzlatte sein. Letztere kann eine größere Stärke und wahlweise auch eine größere Breite als die benachbarten Dachlatten haben. Die Latte erstreckt sich am besten über mehrere Dacheindeckungselemente. Alternativ kommt auch ein Metallprofil mit z.B. hutförmigem Querschnitt in Betracht. Dieses Metallprofil kann wahlweise parallel zu den Dachlatten oder in First/Trauf-Richtung angeordnet und befestigt sein. Im letzteren Fall bietet der Hohlraum unter dem Wellenberg des Dacheindeckungselementes genügend Freiraum für das Metallprofil.

Um zu vermeiden, dass beim Befestigen der Vorrichtung durch Eindrehen der Schraube auf das Dacheindeckungselement eine Kraft rechtwinklig zur Dachfläche ausgeübt wird, die zum Brechen des Dacheindeckungselementes führen könnte, ist zwischen dem Band und der Latte, in welche die Schraube eingedreht wird, am besten als Abstandhalter eine Hülse angeordnet.

Das Oberteil der Hülse ist zweckmäßig in das Loch des Bandes eingepresst, um die Zahl der zu handhabenden Teile der Vorrichtung auf einem Minimum zu halten. Außerdem hat die Hülse oberseitig des Bandes einen Kragen, so dass Windsogkräfte über das Band, den Kragen der Hülse, den in diesem Kragen am besten versenkt angeordneten Schraubenkopf und damit letztlich in die lastaufnehmende zusätzliche Latte oder dergleichen abgetragen werden.

Die Befestigungsvorrichtung nach der Erfindung wird nachfolgend anhand der Zeichnung erläutert, in der ein Ausführungsbeispiel dargestellt ist. Es zeigt:
- Fig. 1:: einen Abschnitt aus einer Dacheindeckung mit zwei Photovoltaikmodulen,
- Fig. 2:: eine isometrische Darstellung einer der Befestigungsvorrichtungen für die Photovoltaikmodule,
- Fig. 3:: die auf einem gewellten Dachstein montierte Befestigungsvorrichtung im Querschnitt, verschraubt mit einer zusätzlichen Latte,
- Fig. 4:: alternativ zu Fig. 3 die Verschraubung der Befestigungsvorrichtung mit einer Profilschiene und
- Fig. 5:: eine perspektivische Darstellung der teilweise eingedeckten Dachunterkonstruktion zur Veranschaulichung der beiden Verbindungsarten der Befestigungsvorrichtung mit der Dachunterkonstruktion.

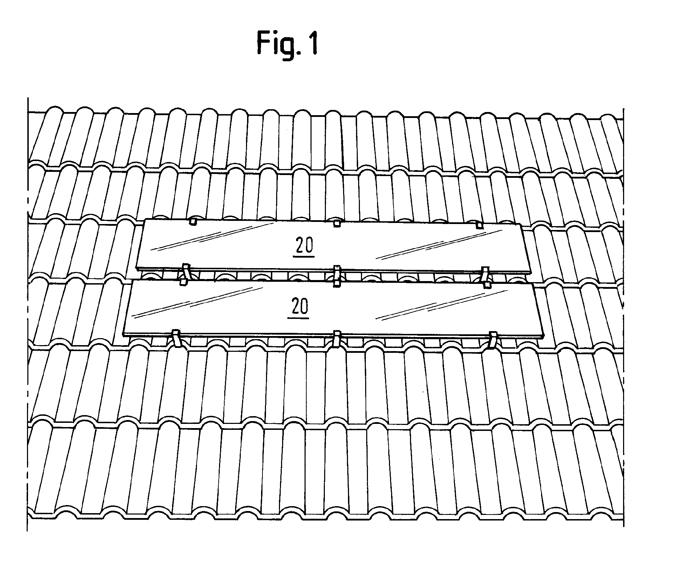

Figur 1 zeigt einen Ausschnitt aus einer Dacheindeckung aus gewellten Dachsteinen, auf der zwei Photovoltaikmodule 20 über mehrere voneinander beabstandete Befestigungsvorrichtungen nach der Erfindung festgelegt sind.

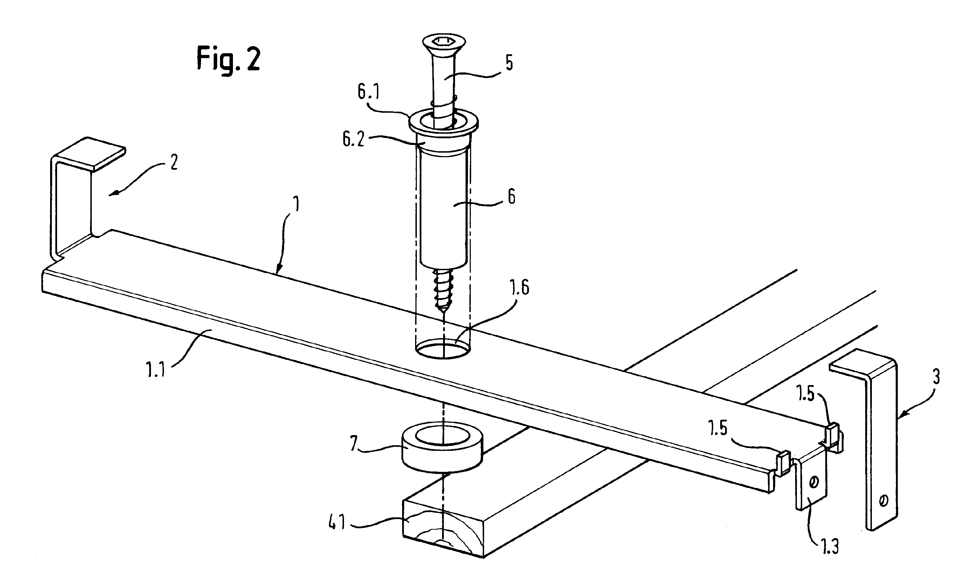

Gemäß Fig. 2 besteht jede der Befestigungsvorrichtungen in Fig. 1 aus einem Band 1 aus Flachmaterial mit zu einem flachen U-Profil abgewinkelten Längsrändern 1.1 und 1.2. Das Band 1 hat an seinem im montierten Zustand firstseitigen Ende einen Schuh 2, bestehend aus einer zweifachen Abwinkelung des zuvor entsprechend zugerichteten Endabschnittes des Bandes 1. Dieser Schuh 2 ist zum Übergreifen des firstseitigen Randbereichs des jeweiligen Moduls 20 bestimmt. An seinem nach Montage traufseitigem Ende hat das Band 1 eine zu dem Schuh 2 gegensinnige Abwinkelung in Form einer Lasche 1.3. Beidseits der Lasche 1.3 hat das Band 1 Nasen 1.5, die durch Abwinkelung des entsprechend hergerichteten Endabschnittes des Bandes 1 gegensinnig zu der Lasche 1.3 erzeugt sind. Die Nasen 1.5 dienen beim Einsetzen des jeweiligen Photovoltaikmoduls als Anschläge für dessen unteren bzw. traufseitigen Rand. Endgültig gesichert wird das Photovoltaikmodul durch einen umgekehrten L-Winkel 3, der mit der Lasche 1.3 verbunden, am besten vernietet ist. Hierzu dienen die angedeuteten Löcher in der Lasche 1.3 und dem L-Winkel 3. Dessen kurzer Schenkel übergreift dann den traufseitigen Rand des Moduls 20 (vgl. Fig. 1).

Vorzugsweise in der Mitte hat das Band 1 ein Loch 1.6 zum Einsetzen, insbesondere Einpressen einer Abstandshülse 6 mit einem Kragen 6.1, an den sich ein kurzer Abschnitt 6.2 anschließt, der zur Erzeugung eines Presssitzes einen etwas größeren Durchmesser als die restliche Länge der Hülse 6 hat. Dieser größere Durchmesser ist der Deutlichkeit halber übertrieben dargestellt. Die Hülse 6 ist zur Aufnahme einer Schraube 5 bestimmt, mittels derer die Befestigungsvorrichtung auf einem Dachstein unter Zwischenschaltung eines Dichtungsringes 7 festgelegt wird, und zwar durch Eindrehen der Schraube 5 in ein unter dem Dachstein befindliches und mit der Dachunterkonstruktion verbundenes Profil, hier in Form einer Holzlatte 41.

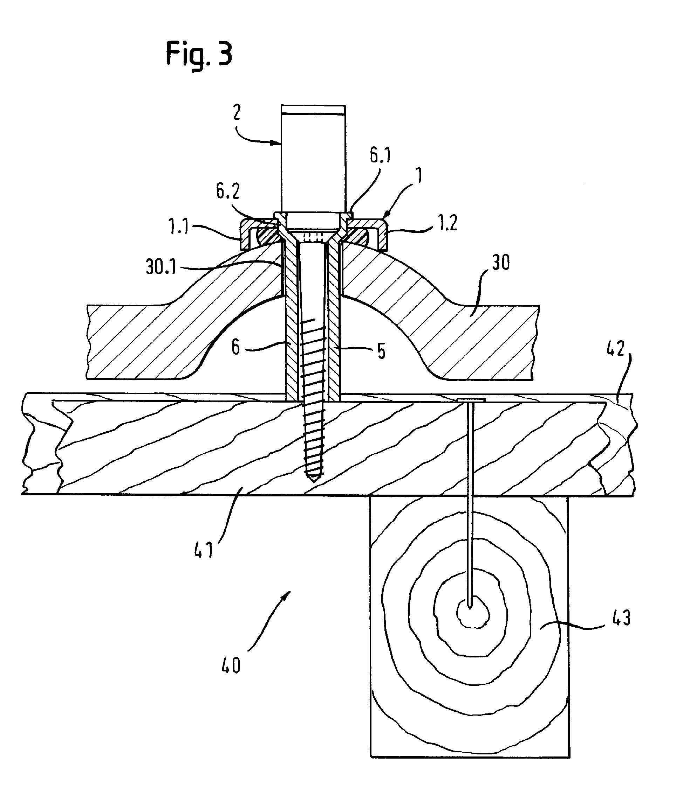

Im Einzelnen ist dies besser aus Fig. 3 ersichtlich. In das Loch 1.6 des Bandes 1 ist die Hülse 6 mit ihrem Abschnitt 6.2 unverlierbar eingepresst und auf der Unterseite des Bandes 1 von dem Dichtring 7 umschlossen. Die Hülse 6 durchgreift ein Loch 30.1 in dem Dachstein 30 und stützt sich mit ihrem unteren Ende gegen die Latte 41 ab, die ihrerseits parallel zu der angedeuteten, üblichen Dachlatte 42 auf einem Sparren 43 der Dachunterkonstruktion 40 aufliegt und mit diesem Sparren 43 über den angedeuteten Nagel verbunden ist. Die Hülse 6 hat an ihrem oberen Ende eine Ansenkung zur Aufnahme des Kopfes der Schraube 6, die in die Latte 41 eingedreht ist. Die abgewinkelten Längsränder 1.1 und 1.2 des Bandes 1 sorgen für eine Ausrichtung der Befestigungsvorrichtung parallel zur Scheitellinie des Dachsteins 30 bzw. in First/Trauf-Richtung.

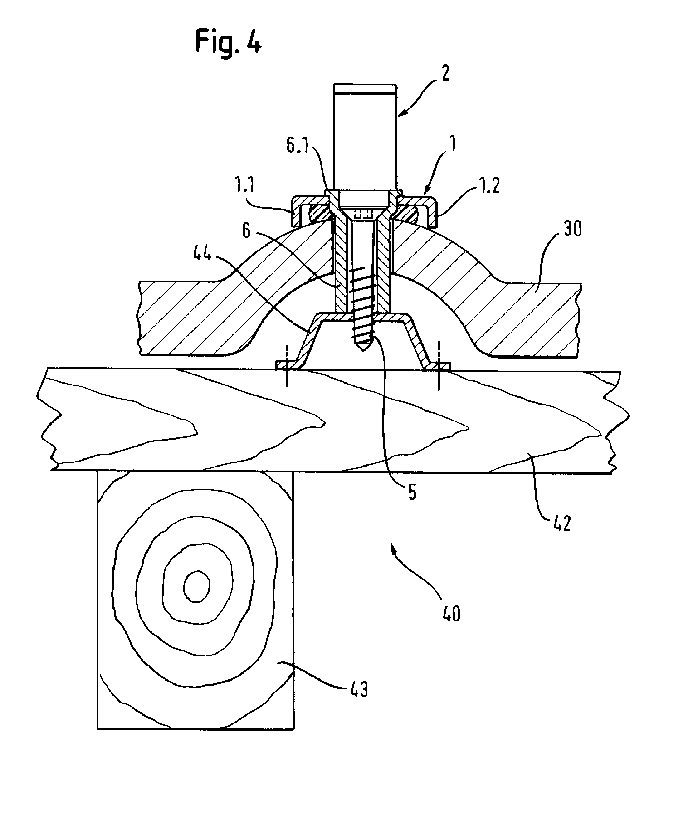

Statt über die Latte 41 kann die Befestigungsvorrichtung mit der Dachunterkonstruktion 40 gemäß Fig. 4 beispielsweise auch über eine Metallprofilschiene 44 verbunden sein, die ihrerseits in First/Trauf-Richtung verläuft und auf die Dachlatten 42 aufgenagelt oder aufgeschraubt ist. Die Abstandshülse 6 ist entsprechend kürzer und die Schraube 5 am besten eine selbstschneidende Blechschraube.

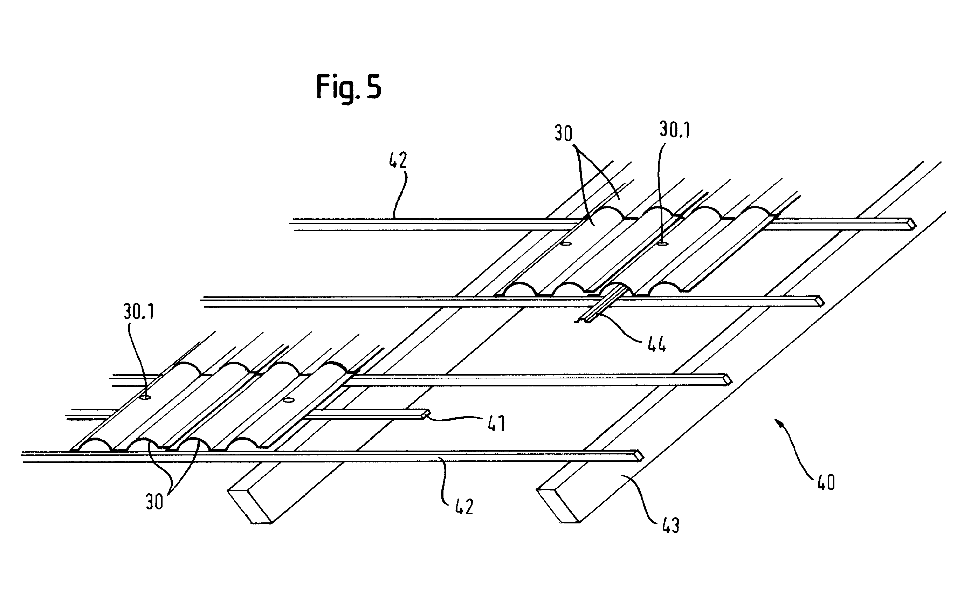

Figur 5 veranschaulicht schematisch, dass in der Befestigungsart der Fig. 3 die zusätzliche Latte 41 parallel zu den Dachlatten 42 verläuft, während im Fall der Befestigungsart gemäß Fig. 4 die Metallprofilschiene 44 unterhalb der Wellung des Dachsteins 30, auf der die Befestigungsvorrichtung angeordnet ist, in First/Trauf-Richtung verläuft.

## Patentansprüche

1. Vorrichtung zur Befestigung eines Photovoltaikmoduls (20) auf einer Dacheindeckung, insbesondere einer gewellten Dacheindeckung z.B. aus Dachziegeln (30), Dachsteinen oder Wellplatten, **gekennzeichnet durch** ein Band (1) mit einer Länge entsprechend der Breite des Moduls (20) und zur Auflage auf einem Element (30) der Dacheindeckung in First/Trauf-Richtung bestimmt,
- mit einem im montierten Zustand firstseitigen Ende (2), das zum Übergreifen des firstseitigen Randbereiches des Moduls (20) ausgebildet ist,
- mit einem im montierten Zustand traufseitigen Ende, das zur Befestigung eines Halters (3) für den traufseitigen Rand des Moduls (20) ausgebildet ist,
- und mit einem Mittel (5) zum Verbinden des Bandes (1) **durch** das Element (30) der Dacheindeckung hindurch mit der Dachunterkonstruktion.

2. Vorrichtung nach Anspruch 1, **dadurch gekennzeichnet, dass** das Band (1) abgewinkelte Längsränder (1.1, 1.2) hat.

3. Vorrichtung nach Anspruch 1 oder 2, **dadurch gekennzeichnet, dass** das Band (1) aus einem Metallprofil besteht.

4. Vorrichtung nach einem der Ansprüche 1 bis 3, **dadurch gekennzeichnet, dass** das firstseitige Ende des Bandes (1) zur Bildung eines Schuhs (2) zum Übergreifen des firstseitigen Randbereiches des Moduls (20) zweimal abgewinkelt ist.

5. Vorrichtung nach einem der Ansprüche 1 bis 4, **dadurch gekennzeichnet, dass** das traufseitige Ende des Bandes (1) zur Bildung einer Befestigungslasche (1.3) für den Halter (3) in Richtung auf das Element (30) der Dacheindeckung abgewinkelt ist.

6. Vorrichtung nach einem der Ansprüche 1 bis 5, **dadurch gekennzeichnet, dass** der Halter aus einem umgekehrten L-Winkel (3) besteht.

7. Vorrichtung nach einem der Ansprüche 1 bis 6, **dadurch gekennzeichnet, dass** der Halter (3) und das Band (1) zur Vernietung oder Verschraubung miteinander ausgebildet sind.

8. Vorrichtung nach einem der Ansprüche 1 bis 7, **dadurch gekennzeichnet, dass** am traufseitigen Ende des Bandes (1) mindestens eine Nase (1.5) als Anlage für den traufseitigen Rand des Moduls (20) ist.

9. Vorrichtung nach einem der Ansprüche 1 bis 8, **dadurch gekennzeichnet, dass** das Mittel zur Verbindung mit der Dachunterkonstruktion aus mindestens einer Schraube (5) besteht, die, ein Loch (1.6) in dem Band (1) und ein weiteres Loch (30.1) in dem Dacheindeckungselement (30) durchgreifend, in ein Profil (41) eindrehbar ist, das Teil der Dachunterkonstruktion (40) ist.

10. Vorrichtung nach Anspruch 9, **gekennzeichnet durch** eine Hülse (6) als Abstandhalter zwischen dem Band (1) und dem Profil (41) zum Eindrehen der Schraube (5).

11. Vorrichtung nach Anspruch 10, **dadurch gekennzeichnet, dass** die Hülse (6) in das Loch (1.6) des Bandes (1) eingepresst ist und einen Kragen (6.1) oberseitig des Bandes (1) hat.
